(19) Europäisches Patentamt / European Patent Office / Office européen des brevets

(11) **EP 3 451 591 B1**

(12) **EUROPÄISCHE PATENTSCHRIFT**

(45) Veröffentlichungstag und Bekanntmachung des Hinweises auf die Patenterteilung:
**18.03.2020  Patentblatt 2020/12**

(51) Int Cl.:
**H04L 12/43** *(2006.01)*

(21) Anmeldenummer: **17188950.4**

(22) Anmeldetag: **01.09.2017**

(54) **VERFAHREN ZUM BETRIEB EINES KOMMUNIKATIONSNETZWERKS IN RINGTOPOLOGIE SOWIE DERARTIGES KOMMUNIKATIONSNETZWERK**

METHOD OF OPERATING A COMMUNICATION NETWORK IN A RING TOPOLOGY, AND SUCH A COMMUNICATION NETWORK

PROCÉDÉ DE FONCTIONNEMENT D'UN RÉSEAU DE COMMUNICATION EN TOPOLOGIE EN ANNEAU AINSI QU'UN TEL RÉSEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.03.2019  Patentblatt 2019/10**

(73) Patentinhaber: **Siemens Aktiengesellschaft 80333 München (DE)**

(72) Erfinder: **Dilger, Marco 77830 Bühlertal (DE)**

(56) Entgegenhaltungen:
EP-A1- 2 413 538          EP-A1- 2 501 080
US-A1- 2011 274 010    US-A1- 2015 124 600

**Beschreibung**

Die vorliegende Erfindung betrifft ein Verfahren zum Betrieb eines Kommunikationsnetzwerks, insbesondere eines Ethernet-Netzwerks, mit Ringgeräten, die mittels Ringleitungen in einer Ringtopologie miteinander vernetzt sind, wobei die Ringgeräte an einem Ringredundanzverfahren zur Übertragung von Daten über ein Ringredundanzprotokoll teilnehmen, bei dem ein verwaltendes Ringgerät regelmäßig Testpakete in beiden Ringrichtungen über das Kommunikationsnetzwerk schickt, die jeweils der Reihe nach von den anderen Ringgeräten empfangen und von diesen sukzessive bis zu dem verwaltenden Ringgerät zurück weitergeleitet werden, um Störungen des Kommunikationsnetzwerks festzustellen. Ein solches Verfahren wird auch in der Patentanmeldung EP 2 501 080 A1 offenbart. Die Erfindung betrifft des Weiteren ein derartiges Kommunikationsnetzwerk.

Ausfallsicherheit ist eine wichtige Anforderung in der Fabrik- und Prozessautomatisierung oder bei der Energieversorgung. Zur Erhöhung der Netzwerkverfügbarkeit werden industrielle Kommunikationsnetzwerke mit redundanten physischen Verbindungspfaden zwischen den Netzknoten bzw. Netzgeräten ausgestattet. Es hat sich bewährt, die Netzgeräte mittels Leitungen in Form einer Ringtopologie zu verbinden. Hierzu umfasst jedes Netzgerät zwei Ringanschlüsse und verlaufen die Leitungen jeweils zwischen zwei Ringanschlüssen zweier unmittelbar benachbarter Netzgeräte - im Folgenden Ringgeräte genannt. Die Installation einer Ringtopologie ist verglichen mit anderen Netzwerk-Topologien mit einem relativ geringen Verkabelungsaufwand verbunden. Des Weiteren ermöglicht eine Ringtopologie eine vergleichsweise schnelle Detektion von Netzwerkstörungen und eine vergleichsweise schnelle Rekonfiguration des Netzwerks.

Während des Betriebs eines solchen Kommunikationsnetzwerks in Ringtopologie nehmen die Ringgeräte an einem Ringredundanzverfahren zur Übertragung von Daten, wie etwa Steuerungsdaten und/oder Nutzdaten, teil. Der Anmelderin sind unterschiedliche Ringredundanzverfahren bekannt, die unterschiedliche Echtzeit-Ringredundanzprotokolle für einen Austausch von Daten verwenden. Alle auf Testpaketen basierenden Ringredundanzverfahren haben gemeinsam, dass eines der Ringgeräte - im Folgenden als verwaltendes Ringgerät bezeichnet - regelmäßig Testpakete in beiden Richtungen der Ringtopologie über das Kommunikationsnetzwerk schickt. Genauer gesagt sendet das verwaltende Ringgerät die Testpakete auf einem seiner Ringanschlüsse über den Ring, wobei die Testpakete von den anderen Ringgeräten sukzessive weitergeleitet werden. Haben die Testpakete die Ringtopologie vollständig durchlaufen, so empfängt sie das verwaltende Ringgerät über seinen anderen Ringanschluss. In diesem Fall kann das verwaltende Ringgerät schlussfolgern, dass der Ring der Ringtopologie geschlossen, d.h. das Kommunikationsnetzwerk nicht gestört ist. Folglich sperrt das verwaltende Ringgerät einen seiner Ringanschlüsse für die gesamte Kommunikation mit Ausnahme der Testpakete, um endlose zirkulierende Pakete beziehungsweise Ethernet-Broadcasts in dem Ring zu vermeiden.

Alternativ ist es möglich, dass das verwaltende Ringgerät eine Störung des Kommunikationsnetzwerks feststellt. Denn fällt eine Komponente, d.h. ein Ringgerät oder eine Ringleitung, des Kommunikationsnetzwerks beispielsweise durch einen Leitungsbruch oder einen Ringgerätedefekt aus, so kommen die von einem Ringanschluss des verwaltenden Ringgeräts versendeten Testpakete am jeweils anderen Ringanschluss des verwaltenden Ringgeräts nicht an, was das verwaltende Ringgerät feststellen kann. Der Ausfall eines Ringgeräts darf jedoch die Kommunikation der restlichen Ringgeräte nicht oder nur innerhalb einer möglichst kurzen Ausfallzeit des Netzwerks - der sogenannten Rekonfigurationszeit - beeinflussen. Bei einem Ringredundanzverfahren wird daher die Kommunikation über einen alternativen Kommunikationspfad, der als Redundanzpfad bezeichnet wird, fortgesetzt.

Im Folgenden wird beispielhaft näher auf das sogenannte Media-Redundancy-Protokoll, MRP, eingegangen. Beim MRP öffnet das verwaltende Ringgerät - als Media-Redundancy-Manager, MRM, bezeichnet - nach einer detektierten Störung einen alternativen Kommunikationspfad, indem der MRM seinen bislang gesperrten Ringanschluss durchschaltet und die anderen Ringgeräte - als Media-Redundancy-Clients, MRC, bezeichnet - durch Übermittlung von Topologieänderungspaketen über die geänderte Topologie informiert und deren Pakete in beide Ringrichtungen weiterleitet. Somit geben die MRCs ihre Pakete nicht auf den unterbrochenen Pfad, sondern verschicken sie über den MRM.

Eine Formel zur Berechnung der Rekonfigurationszeit $T_{rec}$ eines Kommunikationsnetzwerks in Ringtopologie, das mit dem MRP-Redundanzverfahren betrieben wird, ist aus dem Standardisierungsdokument IEC FDIS 62439-2 (High Availability Automation Networks), Kapitel 9.9 (Calculation of MRP ring recovery time) bekannt. Die Formel setzt sich aus einer Summe zweier Größen, nämlich $T_{detect}$ und $T_{flush}$, zusammen:

$$T_{rec} = T_{detect} + T_{flush} \qquad (1)$$

Hierbei ist $T_{detect}$ die Zeit von dem Auftreten der Störung bis zu deren Detektierung in dem MRM und setzt sich wiederum aus der Summe zweier Größen, nämlich $T_{test}$ und $T_{ring}$, zusammen:

$$T_{detect} = T_{test} + T_{ring} \qquad (2)$$

Hierbei ist $T_{test}$ eine Zeitdauer, während der keine Testpakete am MRM ankommen und nach der der MRM schließlich eine Störung detektiert:

$$T_{test} = MRP\_TSTdefaultT \ x \ MRP\_TSTNRmax \qquad (3)$$

Hierbei ist MRP_TSTdefaultT das MRP_Test default interval, also das Zeitintervall der Testpakete, d.h. die Häufigkeit mit der Testpakete über die Ringtopologie gesendet werden. Bei MRP_TSTNRmax handelt es sich um die MRP_Test monitoring count, also die Mindestanzahl der fehlenden Pakete, nach der eine Störung detektiert wird.
$T_{ring}$ ist die Zeitdauer, die ein Testpaket benötigt, um die gesamte Ringtopologie zu durchlaufen:

$$T_{ring} = N \ x \ (T_{switch} + T_{queue} + T_{bit} + T_{line}) \qquad (4)$$

Hierbei ist N die Gesamtzahl der teilnehmenden Ringgeräte. $T_{switch}$ ist die Zeitverzögerung, die durch jedes Switching node eingeführt wird. $T_{queue}$ ist die Zeitverzögerung, die durch ein Paket eingeführt wird, das bereits beispielsweise im Puffer eines Ringgeräts ist und das auf dem Kommunikationsnetzwerk übertragen wird, wodurch die Übertragung eines Testpakets verzögert wird. Denn wenn ein Testpaket auf einem Ringanschluss eines Ringgeräts gesendet werden soll, muss es zunächst warten bis ein vorheriges Störpaket oder sogenannter "Best Effort"-Datenverkehr mit geringerer Priorität als das Testpaket vollständig auf dem Ringanschluss gesendet wurde. Des Weiteren ist $T_{bit}$ die Zeit, die ein Ringgerät benötigt, um Testpakete zu senden beziehungsweise zu empfangen. Zuletzt ist $T_{line}$ die Signallaufzeit der Pakete auf dem physikalischen Medium, die bei einem normalen Abstand der Ringgeräte häufig vernachlässigt werden kann.
Nach der Detektierung der Störung beginnt der MRM Topologieänderungspakete an die anderen Ringgeräte zu senden, um eine Entleerung der sogenannten "Filtering Database", FDB, in den Ringgeräten zu initiieren, nach einer sogenannten "Hold-Down"-Zeit. Somit setzt sich der zweite Ausdruck $T_{flush}$ in der vorstehend erwähnten Formel (1) zur Berechnung der Rekonfigurationszeit $T_{rec}$ wie folgt zusammen:

$$T_{flush} = T_{hold} + T_{ring} + T_{FDB} \qquad (5)$$

Dabei setzt sich $T_{hold}$ wie folgt zusammen:

$$T_{hold} = MRP\_TOPchgT \ x \ MRP\_TOPNRmax \qquad (6)$$

Hierbei ist MRP_TOPchgT das "Topology change request interval", also das Zeitintervall der Topologieänderungspakete, d.h. die Häufigkeit mit der Topologieänderungspakete gesendet werden. MRP_TOPNRmax ist die sogenannte "Topology change repeat count", also eine Größe, die angibt, wie oft Topologieänderungspakete gesendet warden. Denn häufig ist es notwendig, die Topologieänderungspakete mehrmals zu schicken, um sicherzustellen, dass die vorgesehenen Änderungen auch tatsächlich an jedem Ringgerät der Ringtopologie erfolgt sind.
$T_{FDB}$ ist die Zeitdauer, die ein Ringgerät benötigt, um seine FDB zu entleeren.
Somit stellt sich die Formel zur Berechnung der Rekonfigurationszeit $T_{rec}$ wie folgt dar:

$$T_{rec} = MRP\_TSTdefaultT \ x \ MRPTSTNRmax + $$
$$2 \ x \ N \ x \ (T_{switch} + T_{queue} + T_{bit} + T_{line}) + T_{FDB} + T_{hold} \qquad (7)$$

Die vorstehende Formel zur Berechnung der Rekonfigurationszeit $T_{rec}$ wurde zwar im Kontext des MRP-Verfahrens erläutert, gilt jedoch in gleicher Weise auch für andere Ringredundanzverfahren, die auf der Verwendung von Testpaketen beruhen.
Die vorliegende Anmeldung beschäftigt sich mit der Rekonfigurationszeit $T_{rec}$ in einem "Worst Case"-Szenario, also einem Schlimmstfall-Szenario, das nicht unbedingt eintreten muss jedoch im Falle des Eintretens eine problematisch hohe Rekonfigurationszeit zur Folge hat. In diesem Szenario wird angenommen, dass sich im Moment des Absendens eines Testpakets von hoher Priorität noch ein Paket - ein sogenanntes Störpaket oder "Best Effort"-Datenverkehrspaket - mit einer maximalen Länge von 1522 Bytes zur Übertragung im Kommunikationsnetzwerk befindet. Da die Übertragung eines Ethernet-Pakets nicht unterbrochen werden kann, muss das Testpaket in einer Ausgangswarteschleife eines Ringgeräts zunächst warten. Somit nimmt in diesem "Worst Case"-Szenario die Zeitverzögerung $T_{queue}$ in jedem Ringgerät einen Maximalwert von 122μs an. Im Folgenden wird mittels der Formel 7 beispielhaft die Rekonfigurationszeit $T_{rec}$ für eine Gesamtzahl von 14 beziehungsweise 50 Ringgeräten innerhalb des Kommunikationsnetzwerks berechnet, wobei die Signallaufzeit $T_{line}$ als vernachlässigbar angenommen wurde, also $T_{line} = 0$ gesetzt wurde.

$$T_{rec}(N=14) = 1ms \times 3 + 2 \times 14 \times (10\mu s + 122\mu s + 5,12\mu s) + 0,5ms + 1,5ms \approx 8,8ms \qquad (8)$$

$$T_{rec}(N=50) = 1ms \times 3 + 2 \times 50 \times (10\mu s + 122\mu s + 5,12\mu s) + 0,5ms + 1,5ms \approx 18,8ms \qquad (9)$$

Man erkennt, dass insbesondere mit einer steigenden Gesamtzahl von Ringgeräten die sich ergebende Rekonfigurationszeit $T_{rec}$ maßgeblich durch $T_{queue}$ bestimmt wird und einen relativ hoch Wert annimmt. Da jedoch innerhalb der Rekonfigurationszeit Paketverluste nicht ausgeschlossen werden können, gehen die Bestrebungen dahin, die Rekonfigurationszeit zu minimieren.

Bis zum heutigen Tage ist man gezwungen, die maximale Anzahl der Ringgeräte zu begrenzen oder das Zeitintervall der Testpakete MRP_TSTdefaultT zu verringern, um eine geforderte Rekonfigurationszeit $T_{rec}$ zu garantieren. Durch eine festgelegte maximale Anzahl von Ringgeräten ergibt sich jedoch eine unerwünschte Einschränkung der Netzwerkgröße. Eine Verringerung des Zeitintervalls der Testpakete, also eine Erhöhung der Anzahl von gesendeten Testpaketen, führt zu einer erhöhten Netzlast durch Testpakete und somit zu einer erhöhten CPU-Last im verwaltenden Ringgerät beziehungsweise MRM. Zum Zwecke einer besseren Veranschaulichung sei darauf hingewiesen, dass das bei den Berechnungen (8) und (9) angenommene Zeitintervall von 1ms bedeutet, dass eine CPU des verwaltenden Ringgeräts 2000 Testpakete pro Sekunde empfangsseitig verarbeiten muss und ebenso 2000 Pakete versenden muss.

Bei einem "Worst Case"-Szenario der zuvor beschriebenen Art wäre es also wünschenswert, die Zeitverzögerung $T_{queue}$ auf den Wert 0 setzen zu können. Denn wie die nachstehenden Berechnungen, bei denen es sich um die mit $T_{queue} = 0$ angepassten Berechnungen (8) und (9) handelt, zeigen, würde sich hierdurch eine deutlich niedrigere Rekonfigurationszeit $T_{rec}$ ergeben.

$$T_{rec}(N=14) = 1ms \times 3 + 2 \times 14 \times (10\mu s + 5,12\mu s) + 0,5ms + 1,5ms \approx 5,4ms \qquad (10)$$

$$T_{rec}(N=50) = 1ms \times 3 + 2 \times 50 \times (10\mu s + 5,12\mu s) + 0,5ms + 1,5ms \approx 6,5ms \qquad (11)$$

Vor diesem Hintergrund liegt der vorliegenden Erfindung die Aufgabe zugrunde, ein Verfahren zum Betrieb eines Kommunikationsnetzwerks in Ringtopologie der eingangs genannten Art bereitzustellen, das im Falle von zumindest einem innerhalb des Kommunikationsnetzwerks vorhandenen Störpakets eine geforderte Rekonfigurationszeit auf eine effiziente Weise garantiert.

Zur Lösung dieser Aufgabe schafft die vorliegende Erfindung ein Verfahren der eingangs genannten Art, das dadurch gekennzeichnet ist, dass eine Verzögerung der Übertragung eines Testpakets entlang der Ringtopologie aufgrund zumindest eines Störpakets innerhalb der Ringtopologie verhindert wird durch die Schritte:

a) Synchronisieren der Zeit aller Ringgeräte;
b) Implementieren von zumindest Teilen einer Datenverkehrsplanung und Abwicklung, insbesondere der vollständigen Datenverkehrsplanung und Abwicklung, gemäß Standard IEEE 802.1Qbv in das angewandte Ringredundanzverfahren durch Anwenden von zumindest Teilen eines Time-Aware-Shaper-Verfahrens, insbesondere eines vollständigen Time-Aware-Shaper-Verfahrens, umfassend die Schritte:

    b1) Einsortieren aller Testpakete in den einzelnen Ringgeräten in eine eigene Datenverkehrs-Prioritätsklasse;
    b2) Zuteilen einer exklusiven Sendewarteschlange für die Datenverkehrs-Prioritätsklasse der Testpakete für jedes Ringgerät;

b3) Definieren eines geschützten Sendezeitfensters für die zugeteilte Sendewarteschlange für jedes Ringgerät; und

b4) Einrichten eines Schutzzeitbandes zeitlich unmittelbar vor jedem geschützten Sendezeitfenster, wobei innerhalb des Schutzzeitbandes keine Datenübertragung gestartet wird, jedoch eine kurz vor Beginn des Schutzzeitbandes gestartete Datenübertragung abgeschlossen werden kann,

wobei die Übertragung der Testpakete derart geplant und gesteuert wird, dass diese an den Ringgeräten zumindest im Wesentlichen ohne Wartezeit jeweils innerhalb des Sendezeitfensters eines Ringgeräts weitergeleitet werden.

Der Erfindung liegt somit die Idee zugrunde, im Standard IEEE 802.1Qbv definierte Verfahren zur Optimierung des "Worst Case"-Verhaltens bei Ringredundanzverfahren anzuwenden. Genauer gesagt soll die Übertragung der Testpakete derart geplant und gesteuert werden, dass diese an jedem Ringgerät innerhalb eines eigens für Testpakete vorgesehenen und geschützten Sendezeitfensters ohne Wartezeit, also im Sinne einer "grünen Welle", weitergeleitet werden. Auf diese Weise ergibt sich ein Wert $T_{queue}$, der zumindest im Wesentlichen gleich 0, bevorzugt gleich 0, ist. Dies hat wiederum zur Folge, dass sich die Rekonfigurationszeit $T_{rec}$ verglichen mit den vorbekannten Ringredundanzverfahren deutlich reduziert, wie beispielsweise aus den Berechnungen (10) und (11) im Vergleich zu den Berechnungen (8) und (9) hervorgeht. Somit kann bei gleichem Zeitintervall der Testpakete und/oder bei gleicher Anzahl von Ringgeräten eine wesentlich geringere Rekonfigurationszeit $T_{rec}$ garantiert werden. Ebenso kann für eine geforderte Rekonfigurationszeit $T_{rec}$ das notwendige Zeitintervall der Testpakete vergrößert werden, um eine geringere CPU-Auslastung des verwaltenden Ringgeräts zu erreichen.

Gemäß einer Ausgestaltung der Erfindung kann das verwaltende Ringgerät bezüglich der Zeitsynchronisation in Schritt a) die Rolle einer Referenzuhr übernehmen und kann eine Uhrzeit des verwaltenden Ringgeräts als Referenzzeit verwendet werden. Zweckmäßigerweise erfolgt in Schritt a) die Zeitsynchronisation aller Ringgeräte über das Precision-Time-Protokoll, PTP, insbesondere gemäß Standard IEEE 1588 und/oder Standard IEEE 802.1AS und/oder Standard IEEE 802.1AS-Rev. In diesem Fall kann das verwaltende Ringgerät die Rolle der Grandmaster-Uhr im PTP übernehmen.

Bevorzugt wird das geschützte Sendezeitfenster eines Ringgeräts jeweils um die Leitungsverzögerung der Ringleitung zwischen dem Ringgerät und einem unmittelbar vorhergehenden Ringgerät versetzt gegenüber dem geschützten Sendezeitfenster des unmittelbar vorhergehenden Ringgeräts angeordnet, wobei diese Anordnung der Sendezeitfenster für beide Übertragungsrichtungen von Testpaketen innerhalb der Ringtopologie vorgenommen wird. Durch diese Maßnahme kann das geschützte Sendezeitfenster jedes Ringgeräts relativ schmal gehalten werden. Somit kommt es zu keiner Verschwendung von Bandbreiten-Ressourcen.

Die Leitungsverzögerung auf einer Ringleitung kann durch Anwendung eines Peer-To-Peer-Verfahrens gemäß Standard IEEE 1588 und/oder Standard IEEE 802.1AS bestimmt werden. Im Rahmen dieses Peer-To-Peer-Verfahrens wird die Leitungsverzögerung berechnet. Für die konkrete Berechnung wird insbesondere auf Kapitel 11.4 des Standards IEEE 1588 verwiesen.

Vorteilhaft wird in Schritt b4) das Schutzzeitband so groß wie die Übertragungszeit des größtmöglichen Datenpakets gewählt. Auf diese Weise wird sichergestellt, dass eine kurz vor Beginn des Schutzzeitbands gestartete Datenübertragung, beispielsweise eine Übertragung von "Best Effort"-Daten, noch innerhalb des Schutzzeitbands und somit vor Beginn des geschützten Sendezeitfensters für Testpakete fertiggestellt und somit Interferenzen der Testpakete durch "Best Effort"-Datenverkehr vermieden wird.

Das Ringredundanzverfahren kann ein Media-Redundancy-Protokoll-, MRP, Verfahren sein. In diesem Fall übernimmt das verwaltende Ringgerät die Rolle des Media-Redundancy-Managers, MRM. Das Ringredundanzverfahren kann jedoch auch ein anderes Ringredundanzverfahren sein, das auf der Verwendung von Testpaketen beruht. Beispielhaft sind das High-Speed-Redundancy-Protokoll-, HRP, Verfahren, das Device-Level-Ring-, DLR, Verfahren, das Resilient-Packet-Ring-, RPR, Verfahren, das Moxa-Turbo-Ring-Verfahren und das Hiper-Ring-Protokoll-Verfahren genannt.

Bei einer Ausgestaltung des erfindungsgemäßen Verfahrens wird für das geschützte Sendezeitfenster jedes Ringgeräts Cut-Through-Switching aktiviert. Dies ist möglich, da sich in dem geschützten Sendezeitfenster keine Störpakete oder "Best Effort"-Datenverkehr befindet. In an sich bekannter Weise wird beim Cut-Through-Switching-Verfahren der Schaltprozess im Ringgerät bereits eingeleitet, bevor das vollständige Testpaket eingetroffen ist. Hierdurch lässt sich auch der Ausdruck $T_{switch}$ in der Berechnungsformel der Rekonfigurationszeit des Kommunikationsnetzwerks minimieren.

Zur Lösung der zuvor erwähnten Aufgabe schafft die vorliegende Erfindung ferner ein Kommunikationsnetzwerk, insbesondere Ethernet-Netzwerk, mit Ringgeräten, darunter ein verwaltendes Ringgerät, die mittels Ringleitungen in einer Ringtopologie miteinander vernetzt sind, wobei das Kommunikationsnetzwerk eingerichtet ist, um nach dem zuvor beschriebenen erfindungsgemäßen Verfahren betrieben zu werden. Hierbei können die Ringgeräte jeweils ein Switch, eine Bridge, ein Router und/oder ein Hub sein.

Weitere Merkmale und Vorteile der vorliegenden Erfindung werden anhand der nachfolgenden Beschreibung einer Ausführungsform eines Kommunikationsnetzwerks gemäß der vorliegenden Erfindung unter Bezugnahme auf die beiliegende Zeichnung deutlich. Darin ist

Figur 1    eine schematische Ansicht eines Kommunikationsnetzwerks gemäß einer ersten Ausführungsform der vorliegenden Erfindung in einem nicht gestörten Zustand;

Figur 2    eine schematische Ansicht des Kommunikationsnetzwerks aus Figur 1 in einem gestörten Zustand;

Figur 3    eine schematische Darstellung der geschützten Sendezeitfenster für drei aufeinanderfolgende Ringgeräte des Kommunikationsnetzwerks aus Figur 1; und

Figur 4    eine schematische Darstellung der geschützten Sendezeitfenster für drei aufeinanderfolgende Ringgeräte bei einem alternativen Betrieb des Kommunikationsnetzwerks aus Figur 1.

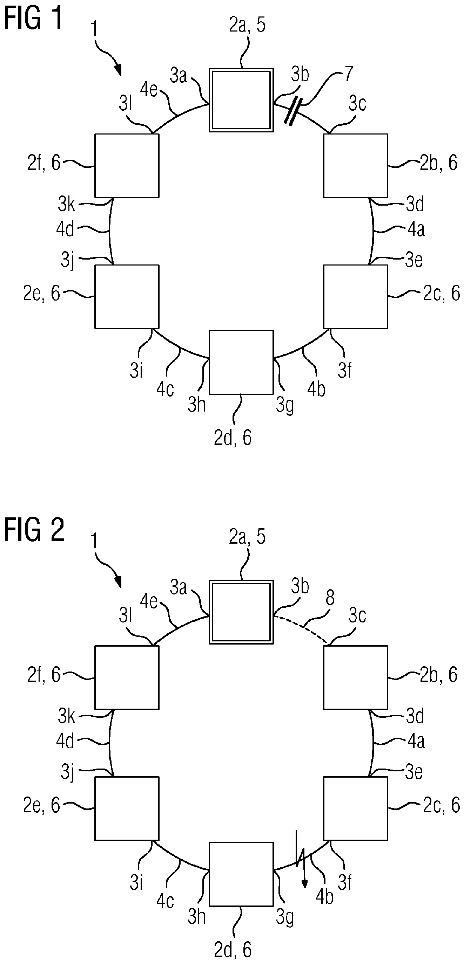

Die Figuren 1 und 2 zeigen schematische Ansichten eines Kommunikationsnetzwerks 1 gemäß einer Ausführungsform der vorliegenden Erfindung. Das Kommunikationsnetzwerk 1, hier ein Ethernet-Netzwerk, umfasst sechs Ringgeräte 2a-f - in diesem Ausführungsbeispiel Switches - mit jeweils zwei Ringanschlüssen 3a-l. Die Ringgeräte 2a-f sind mittels fünf Ringleitungen 4a-e in einer Ringtopologie miteinander vernetzt, wobei die Ringleitungen 4a-e jeweils zwischen zwei Ringanschlüssen 3a-1 zweier unmittelbar benachbarter Ringgeräte 2a-f verlaufen. Die Ringgeräte 2a-f nehmen an einem MRP-Ringredundanzverfahren zur Übertragung von Daten, genauer gesagt Steuerungsdaten und Nutzdaten, über das MRP-Protokoll teil. Bei dem MRP-Ringredundanzverfahren schickt das Ringgerät 2a, das die Rolle eines verwaltenden Ringgeräts - beim MRP Redundanz-Manager oder MRM 5 genannt - übernimmt, regelmäßig Testpakete in beiden Ringrichtungen über das Kommunikationsnetzwerk 1. Genauer gesagt sendet der MRM 5 Testpakete auf einem seiner Ringanschlüsse 3a, 3b über den Ring der Ringtopologie und empfängt diese anschließend wieder über den jeweils anderen seiner Ringanschlüsse 3a, 3b. Die Testpakete werden jeweils der Reihe nach von den anderen Ringgeräten 2b-f - beim MRP Redundanz-Clients oder MRCs 6 genannt - empfangen und von diesen sukzessive bis zu dem MRM 5 zurück weitergeleitet, um Störungen des Kommunikationsnetzwerks 1 festzustellen.
Solange der MRM 5 die von ihm ausgesendeten Testpakete wieder empfängt, das Kommunikationsnetzwerk 1 also nicht gestört ist, sperrt der MRM 5 einen seiner Ringanschlüsse - im vorliegenden Ausführungsbeispiel den Ringanschluss 3b - für die gesamte Kommunikation mit Ausnahme der Testpakete. Auf diese Weise wird verhindert, dass Ethernet-Broadcasts in dem Ring endlos zirkulieren. Die Sperrung des Ringanschlusses 3b ist in Figur 1 mit einem entsprechenden Sperrsymbol 7 angedeutet.
Figur 2 zeigt das Kommunikationsnetzwerk 1 in einem gestörten Zustand. Die Störung ist in diesem Fall ein Ausfall der Ringleitung 4b durch einen Leitungsbruch, welcher mit einem Blitzsymbol hervorgehoben ist. Aufgrund der Störung kommen die bisher über den Ringanschluss 3a des MRM 5 versendeten Testpakete weder am anderen Ringanschluss 3b des MRM 5 noch an den Ringanschlüssen 3d, 3f der Ringgeräte 2b, 2c an. Auf ähnliche Weise kommen die bisher über den Ringanschluss 3b des MRM 5 versendeten Testpakete weder am anderen Ringanschluss 3a noch an den Ringanschlüssen 3g, 3i, 3k der Ringgeräte 2d, 2e, 2f an. Nach detektierter Störung öffnet der MRM 5 daher einen alternativen Kommunikationspfad, den Redundanzpfad 8, indem er seinen bisher gesperrten Ringanschluss 3b durchschaltet, die anderen Ringgeräte 2b-f durch Übermittlung von Topologieänderungspaketen über die geänderte Topologie informiert und deren Pakete von nun an in beide Ringrichtungen weiterleitet. Auf diese Weise ist die Funktionsfähigkeit des Kommunikationsnetzwerks 1 wieder hergestellt, bis die Störung behoben wird.
Das Kommunikationsnetzwerk 1 wird derart betrieben, dass es nach einer relativ kurzen Rekonfigurationszeit, also Ausfallzeit, nach Auftreten der Störung wieder zur Verfügung steht. Um dies zu erreichen, wird verhindert, dass die Übertragung eines jeden Testpakets entlang der Ringtopologie aufgrund zumindest eines Störpakets innerhalb der Ringtopologie verzögert wird. Erfindungsgemäß wird dies durch die folgenden Schritte erreicht:

a) Synchronisieren der Zeit aller Ringgeräte 2a-f;
b) Implementieren von zumindest Teilen einer Datenverkehrsplanung und Abwicklung, insbesondere der vollständigen Datenverkehrsplanung und Abwicklung, gemäß Standard IEEE 802.1Qbv in das angewandte Ringredundanzverfahren durch Anwenden von zumindest Teilen eines Time-Aware-Shaper-Verfahrens, insbesondere eines vollständigen Time-Aware-Shaper-Verfahrens, umfassend die Schritte:

b1) Einsortieren aller Testpakete in den einzelnen Ringgeräten 2a-f in eine eigene Datenverkehrs-Prioritätsklasse;
b2) Zuteilen einer exklusiven Sendewarteschlange für die Datenverkehrs-Prioritätsklasse der Testpakete für jedes Ringgerät 2a-f;
b3) Definieren eines geschützten Sendezeitfensters SZF für die zugeteilte Sendewarteschlange für jedes Ringgerät 2a-f; und

b4) Einrichten eines Schutzzeitbandes in der Größe der Übertragungszeit des größtmöglichen Datenpakets zeitlich unmittelbar vor jedem geschützten Sendezeitfenster SZF, wobei innerhalb des Schutzzeitbandes keine Datenübertragung gestartet wird, jedoch eine kurz vor Beginn des Schutzzeitbandes gestartete Datenübertragung abgeschlossen werden kann,

wobei die Übertragung der Testpakete derart geplant und gesteuert wird, dass diese an den Ringgeräten 2a-f zumindest im Wesentlichen ohne Wartezeit jeweils innerhalb des Sendezeitfensters SZF eines Ringgeräts 2a-f weitergeleitet werden.

Die Zeitsynchronisation aller Ringgeräte 2a-f des Kommunikationsnetzwerks 1 erfolgt über das PTP-Protokoll gemäß Standard IEEE 1588, wobei der MRM 5 die Rolle der Grandmaster-Uhr übernimmt.

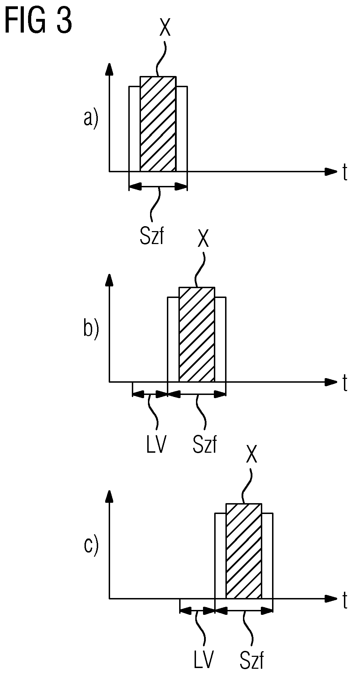

Des Weiteren wird während des Betriebs des Kommunikationsnetzwerks 1 das geschützte Sendezeitfenster SZF eines jeden Ringgeräts 2a-f jeweils um die Leitungsverzögerung LV der Ringleitung 4a-e zwischen dem Ringgerät 2a-f und einem unmittelbar vorhergehenden Ringgerät 2a-f versetzt gegenüber dem geschützten Sendezeitfenster SZF des unmittelbar vorhergehenden Ringgeräts 2a-f angeordnet. Diese Anordnung der Sendezeitfenster SZF wird für beide Übertragungsrichtungen von Testpaketen innerhalb der Ringtopologie vorgenommen. Hierbei wird die Leitungsverzögerung LV auf der jeweiligen Ringleitung durch Anwendung eines Peer-To-Peer-Verfahrens gemäß Standard IEEE 1588 bestimmt. Das Prinzip der gegeneinander versetzten Sendezeitfenster SZF ist in Figur 3 schematisch für drei beliebige aufeinanderfolgende Ringgeräte 2a-f, wie etwa die Ringgeräte 2a, 2f, 2e, des Kommunikationsnetzwerks 1 dargestellt. Hierbei bezieht sich Figur 3a) auf ein erstes Ringgerät 2a-f, Figur 3b) auf ein darauffolgendes zweites Ringgerät 2a-f und Figur 3c) auf ein darauffolgendes drittes Ringgerät 2a-f. Konkret ist zu erkennen, dass bei der Übertragung eines Ethernet-Testpakets (Rahmen X) durch die drei Ringgeräte 2a-f der Sendezeitpunkt des Testpakets in dem zweiten Ringgerät 2a-f (siehe b)) aufgrund der Leitungsverzögerung LV zwischen dem ersten Ringgerät 2a-f und dem zweiten Ringgerät 2a-f auf der Zeitachse um LV nach rechts wandert. Ebenso wandert der Sendezeitpunkt des Testpakets in dem dritten Ringgerät 2a-f (siehe c)) aufgrund der Leitungsverzögerung LV zwischen dem zweiten Ringgerät 2a-f und dem dritten Ringgerät 2a-f auf der Zeitachse um LV nach rechts. Entsprechend wird das geschützte Sendezeitfenster SZF des zweiten Ringgeräts 2a-f um die Leitungsverzögerung LV gegenüber dem geschützten Sendezeitfenster SZF des ersten Ringgeräts 2a-f versetzt angeordnet und wird das geschützte Sendezeitfenster SZF des dritten Ringgeräts 2a-f um die Leitungsverzögerung LV gegenüber dem geschützten Sendezeitfenster SZF des zweiten Ringgeräts 2a-f angeordnet. Hierbei weisen die Leitungsverzögerungen LV der Ringleitungen 4a-e dieselbe Größe auf. Durch die zuvor beschriebene Anordnung der Sendezeitfenster SZF muss in jedem Ringgerät 2a-f ein relativ kleines Sendefenster reserviert werden und es kommt zu keiner Verschwendung von Bandbreiten-Ressourcen. Selbstverständlich sind alle sechs Sendezeitfenster SZF der sechs Ringgeräte 2a-f entsprechend gegeneinander versetzt, auch wenn dies in Figur 3 nicht explizit dargestellt ist.

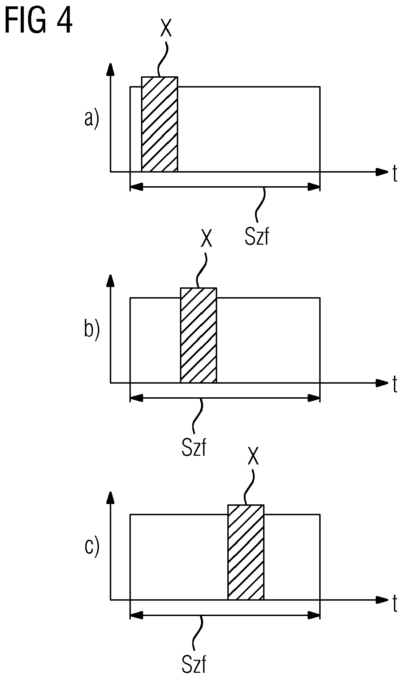

Figur 4 veranschaulicht einen alternativen Betrieb des zuvor beschriebenen Kommunikationsnetzwerks 1, der sich von dem zuvor beschriebenen Betrieb lediglich darin unterscheidet, dass die geschützten Sendezeitfenster SZF der Ringgeräte 2a-f nicht um die Leitungsverzögerung LV gegeneinander versetzt sind. Demnach haben alle Ringgeräte 2a-f zeitgleich ein geschütztes Sendezeitfenster SZF aktiv, auch wenn das zu sendende Testpaket noch gar nicht an manchen Ringgeräten 2a-f angekommen ist. Auf diese Weise muss an den Ringgeräten 2a-f jeweils ein größeres geschütztes Sendezeitfenster SZF reserviert werden.

Zudem wird für das geschützte Sendezeitfenster SZF jedes Ringgeräts 2a-f Cut-Through-Switching aktiviert.

Da in dem Fachgebiet der vorliegenden Erfindung hauptsächlich englischsprachige Fachbegriffe verwendet werden, sind im Folgenden zum Zwecke einer besseren Orientierung einige der in dieser Anmeldung verwendeten Fachbegriffe zusammen mit ihren äquivalenten englischsprachigen Fachbegriffen aufgeführt: Warteschlange (queue), Datenverkehrs-Prioritätsklasse (traffic class), Schutzzeitband (guard band), Leitung (line), Anschluss (port), Ringgerät (node), Rekonfigurationszeit (recovery time oder reconfiguration time), Planung (Scheduling), Vermittlungsknoten (switching node), Ausgangswarteschleife (egress queue).

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So kann es sich bei dem Ringredundanzverfahren beispielsweise auch um ein HRP-, DLR-, RPR-, Moxa-Turbo-Ring- oder Hiper-Ring-Protokoll-Verfahren handeln.

**Patentansprüche**

1. Verfahren zum Betrieb eines Kommunikationsnetzwerks (1), insbesondere eines Ethernet-Netzwerks, mit Ringgeräten (2a-f), die mittels Ringleitungen (4a-e) in einer Ringtopologie miteinander vernetzt sind, wobei die Ringgeräte (2a-f) an einem Ringredundanzverfahren zur Übertragung von Daten über ein Ringredundanzprotokoll teilnehmen, bei dem ein verwaltendes Ringgerät (2a) regelmäßig Testpakete in beiden Ringrichtungen über das Kommunikationsnetzwerk (1) schickt, die jeweils der Reihe nach von den anderen Ringgeräten (2b-f) empfangen und von diesen sukzessive bis zu dem verwaltenden Ringgerät (2a) zurück weitergeleitet werden, um Störungen des Kommunikationsnetzwerks (1) festzustellen, **dadurch gekennzeichnet, dass** eine Verzögerung der Übertragung eines Testpakets entlang der Ringtopologie aufgrund zumindest eines Störpakets innerhalb der Ringtopologie verhindert wird durch die Schritte:

a) Synchronisieren der Zeit aller Ringgeräte (2a-f);
b) Implementieren von zumindest Teilen einer Datenverkehrsplanung und Abwicklung, insbesondere der vollständigen Datenverkehrsplanung und Abwicklung, gemäß Standard IEEE 802.1Qbv in das angewandte Ringredundanzverfahren durch Anwenden von zumindest Teilen eines Time-Aware-Shaper-Verfahrens, insbesondere eines vollständigen Time-Aware-Shaper-Verfahrens, umfassend die Schritte:

b1) Einsortieren aller Testpakete in den einzelnen Ringgeräten (2a-f) in eine eigene Datenverkehrs-Prioritätsklasse;
b2) Zuteilen einer exklusiven Sendewarteschlange für die Datenverkehrs-Prioritätsklasse der Testpakete für jedes Ringgerät (2a-f);
b3) Definieren eines geschützten Sendezeitfensters (SZF) für die zugeteilte Sendewarteschlange für jedes Ringgerät (2a-f); und
b4) Einrichten eines Schutzzeitbandes zeitlich unmittelbar vor jedem geschützten Sendezeitfenster (SZF), wobei innerhalb des Schutzzeitbandes keine Datenübertragung gestartet wird, jedoch eine kurz vor Beginn des Schutzzeitbandes gestartete Datenübertragung abgeschlossen werden kann,
wobei die Übertragung der Testpakete derart geplant und gesteuert wird, dass diese an den Ringgeräten (2a-f) zumindest im Wesentlichen ohne Wartezeit jeweils innerhalb des Sendezeitfensters (SZF) eines Ringgeräts (2a-f) weitergeleitet werden.

2. Verfahren nach Anspruch 1,
**dadurch gekennzeichnet, dass**
in Schritt a) die Zeitsynchronisation aller Ringgeräte (2a-f) über das Precision-Time-Protokoll, PTP, insbesondere gemäß Standard IEEE 1588 und/oder Standard IEEE 802.1AS und/oder Standard IEEE 802.1AS-Rev, erfolgt.

3. Verfahren nach Anspruch 1 oder 2,
**dadurch gekennzeichnet, dass**
das verwaltende Ringgerät (2a) in Schritt a) bezüglich der Zeitsynchronisation die Rolle einer Referenzuhr, insbesondere der Grandmaster-Uhr im PTP, übernimmt und eine Uhrzeit des verwaltenden Ringgeräts (2a) als Referenzzeit verwendet wird.

4. Verfahren nach einem der Ansprüche 1 bis 3,
**dadurch gekennzeichnet, dass**
das geschützte Sendezeitfenster (SZF) eines Ringgeräts (2a-f) jeweils um die Leitungsverzögerung (LV) der Ringleitung (4a-e) zwischen dem Ringgerät (2a-f) und einem unmittelbar vorhergehenden Ringgerät (2a-f) versetzt gegenüber dem geschützten Sendezeitfenster (SZF) des unmittelbar vorhergehenden Ringgeräts (2a-f) angeordnet wird, wobei diese Anordnung der Sendezeitfenster (SZF) für beide Übertragungsrichtungen von Testpaketen innerhalb der Ringtopologie vorgenommen wird.

5. Verfahren nach Anspruch 5,
**dadurch gekennzeichnet, dass**
die Leitungsverzögerung (LV) auf einer Ringleitung (4a-e) durch Anwendung eines Peer-To-Peer-Verfahrens gemäß Standard IEEE 1588 und/oder Standard IEEE 802.1AS bestimmt wird.

6. Verfahren nach einem der vorherigen Ansprüche,
**dadurch gekennzeichnet, dass**
in Schritt b4) das Schutzzeitband so groß wie die Übertragungszeit des größtmöglichen Datenpakets gewählt wird.

7. Verfahren nach einem der vorherigen Ansprüche,
**dadurch gekennzeichnet, dass**
das Ringredundanzverfahren ein Media-Redundancy-Protokoll-, MRP, Verfahren ist und das verwaltende Ringgerät (2a) die Rolle des Media-Redundancy-Managers, MRM, (5) übernimmt.

**8.** Verfahren nach einem der Ansprüche 1 bis 6,
**dadurch gekennzeichnet, dass**
das Ringredundanzverfahren ein High-Speed-Redundancy-Protokoll-, HRP, Verfahren, ein Device-Level-Ring-, DLR, Verfahren, ein Resilient-Packet-Ring-, RPR, Verfahren, ein Moxa-Turbo-Ring-Verfahren oder ein Hiper-Ring-Protokoll-Verfahren ist.

**9.** Verfahren nach einem der vorherigen Ansprüche,
**dadurch gekennzeichnet, dass**
für das geschützte Sendezeitfenster (SZF) jedes Ringgeräts (2a-f) Cut-Through-Switching aktiviert wird.

**10.** Kommunikationsnetzwerk (1),
insbesondere Ethernet-Netzwerk, mit Ringgeräten (2a-f), darunter ein verwaltendes Ringgerät (2a), die mittels Ringleitungen (4a-e) in einer Ringtopologie miteinander vernetzt sind, wobei das Kommunikationsnetzwerk (1) eingerichtet ist, um nach einem Verfahren nach einem der vorhergehenden Ansprüche betrieben zu werden.

**11.** Kommunikationsnetzwerk (1) nach Anspruch 10,
**dadurch gekennzeichnet, dass**
die Ringgeräte (2a-f) jeweils ein Switch, eine Bridge, ein Router und/oder ein Hub sind.

**Claims**

**1.** Method for operating a communication network (1), in particular an Ethernet network, having ring devices (2a-f), which are networked to one another by means of ring lines (4a-e) in a ring topology, wherein the ring devices (2a-f) use a ring redundancy method for transmitting data using a ring redundancy protocol, in which a managing ring device (2a) regularly sends test packets via the communication network (1) in both ring directions, said test packets each being received in order by the other ring devices (2b-f) and progressively forwarded from said other ring devices back to the managing ring device (2a) so as to detect faults on the communication network (1), **characterized in that** a delay in the transmission of a test packet along the ring topology on account of at least one fault packet within the ring topology is prevented by the steps of:

a) synchronizing the time of all ring devices (2a-f);
b) implementing at least portions of a data traffic scheduling and handling, in particular the complete data traffic scheduling and handling, in accordance with the IEEE 802.1Qbv standard in the applied ring redundancy method by applying at least portions of a time aware shaper method, in particular a complete time aware shaper method, comprising the steps of:

b1) sorting all test packets in the individual ring devices (2a-f) into a separate data traffic priority class;
b2) allocating an exclusive send queue for the data traffic priority class of the test packets for each ring device (2a-f);
b3) defining a protected send time window (SZF) for the allocated send queue for each ring device (2a-f); and
b4) setting up a guard time band at a time immediately before each protected send time window (SZF), no data transmission being started within the guard time band, but a data transmission started shortly before the beginning of the guard time band being able to be completed,
wherein the transmission of the test packets is scheduled and controlled such that they are each forwarded to the ring devices (2a-f) within the send time window (SZF) of a ring device (2a-f) at least substantially without a waiting period.

**2.** Method according to Claim 1,
**characterized in that**
in step a), the time synchronization of all ring devices (2a-f) is effected using the precision time protocol, PTP, in particular in accordance with the IEEE 1588 standard and/or the IEEE 802.1AS standard and/or the IEEE 802.1AS-Rev standard.

**3.** Method according to Claim 1 or 2,
**characterized in that**

the managing ring device (2a) takes on the role of a reference clock, in particular the grandmaster clock in the PTP, for the time synchronization in step a), and a time of the managing ring device (2a) is used as reference time.

4. Method according to one of Claims 1 to 3,
   **characterized in that**
   the protected send time window (SZF) of a ring device (2a-f) is arranged in a manner offset from the protected send time window (SZF) of an immediately preceding ring device (2a-f) by the respective line delay (LV) of the ring line (4a-e) between the ring device (2a-f) and the immediately preceding ring device (2a-f), this arrangement of the send time windows (SZF) being performed for both transmission directions for test packets within the ring topology.

5. Method according to Claim 5,
   **characterized in that**
   the line delay (LV) on a ring line (4a-e) is determined by applying a peer-to-peer method in accordance with the IEEE 1588 standard and/or the IEEE 802.1AS standard.

6. Method according to one of the preceding claims,
   **characterized in that**
   in step b4), the guard time band is chosen to be of the same magnitude as the transmission time for the largest possible data packet.

7. Method according to one of the preceding claims,
   **characterized in that**
   the ring redundancy method is a media redundancy protocol, MRP, method and the managing ring device (2a) takes on the role of the media redundancy manager, MRM, (5).

8. Method according to one of Claims 1 to 6,
   **characterized in that**
   the ring redundancy method is a high-speed redundancy protocol, HRP, method, a device-level ring, DLR, method, a resilient packet ring, RPR, method, a Moxa Turbo Ring method or a Hiper Ring protocol method.

9. Method according to one of the preceding claims,
   **characterized in that**
   cut-through switching is activated for the protected send time window (SZF) of each ring device (2a-f).

10. Communication network (1),
    in particular Ethernet network, having ring devices (2a-f), including a managing ring device (2a), which are networked to one another by means of ring lines (4a-e) in a ring topology, wherein the communication network (1) is configured to be operated on the basis of a method according to one of the preceding claims.

11. Communication network (1) according to Claim 10,
    **characterized in that**
    the ring devices (2a-f) are each a switch, a bridge, a router and/or a hub.


**Revendications**

1. Procédé pour faire fonctionner un réseau (1) de communication, notamment un réseau éthernet, comprenant des appareils (2a-f) d'anneau, qui sont mis en réseau entre eux en une topologie en anneau au moyen de lignes (4a-e) d'anneau, les appareils (2a-f) d'anneau participant à un procédé de redondance en anneau de transmission de données par un programme de redondance en anneau, dans lequel un appareil (2a) d'anneau gestionnaire envoie des paquets de test d'une manière régulière dans les deux sens de l'anneau par le réseau (1) de communication, qui sont reçus respectivement dans l'ordre par les autres appareils (2b-f) d'anneau et sont retournés par ceux-ci successivement jusqu'à l'appareil (2a) d'anneau gestionnaire, afin de constater des perturbations du réseau (1) de communication, **caractérisé en ce que** l'on empêche, au sein de la topologie en anneau, un retard de la transmission d'un paquet de test le long de la topologie en anneau en raison d'au moins un paquet perturbateur, par les stades :

   a) synchronisation du temps de tous les appareils (2a-f) d'anneau ;
   b) mise en œuvre d'au moins des parties d'une planification et d'un déroulement de circulation de données, notamment de la planification et du déroulement complet de circulation de données, suivant la norme IEEE 802.1Qbv dans le procédé redondant d'anneau appliqué, par application d'au moins des parties d'un procédé time-aware-shaper, notamment d'un procédé time-aware-shaper complet, comprenant les stades :

b1) classement de tous les paquets de test dans les divers appareils (2a-f) d'anneau en une propre classe de priorité de circulation de données ;

b2) affectation d'une file d'attente d'émission exclusive pour la classe de priorité de circulation de données des paquets de test pour chaque appareil (2a-f) d'anneau ;

b3) définition d'une fenêtre (SZF) de temps d'émission protégée pour la file d'attente d'émission affectée pour chaque appareil (2a-f) d'anneau ; et

b4) configuration d'une bande de temps de protection immédiatement dans le temps avant chaque fenêtre (SZF) de temps d'émission protégée, une transmission de données n'étant pas débutée dans la bande de temps de protection, une transmission de données commencée peu avant le début de la bande de temps de protection pouvant toutefois être terminée, dans lequel on planifie et on commande la transmission des paquets de test de manière à acheminer ceux-ci aux appareils (2a-f) d'anneau au moins sensiblement sans temps d'attente, respectivement, dans la fenêtre (SZF) de temps d'émission d'un appareil (2a-f) d'anneau.

2. Procédé suivant la revendication 1,
**caractérisé en ce qu'**
au stade a), la synchronisation dans le temps de tous les appareils (2a-f) d'anneau s'effectue par le programme precision-time-protokoll, PTP, notamment suivant la norme IEEE 1588 et/ou suivant la norme IEEE 802.1AS et/ou suivant la norme IEEE 802.1AS-Rev.

3. Procédé suivant la revendication 1 ou 2,
**caractérisé en ce que**
l'appareil (2a) d'anneau gestionnaire prend en charge, au stade a), en ce qui concerne la synchronisation dans le temps, le rôle d'une horloge de référence, notamment de l'horloge de grand maître dans le PTP, et utilise, comme temps de référence, un temps d'horloge de l'appareil (2a) d'anneau gestionnaire.

4. Procédé suivant l'une des revendications 1 à 3,
**caractérisé en ce que**
l'on décale, par rapport à la fenêtre (SZF) de temps d'émission protégée de l'appareil (2a-f) d'anneau directement précédent, la fenêtre (SZF) de temps d'émission protégée d'un appareil (2a-f) d'anneau, respectivement, du retard (LV) de ligne de la ligne (4a-e) d'anneau entre l'appareil (2a-f) d'anneau et un appareil (2a-f) d'anneau directement précédent, cet agencement des fenêtres (SZF) de temps d'émission étant effectué pour les deux sens de transmission de paquets de test dans la topologie en anneau.

5. Procédé suivant la revendication 4,
**caractérisé en ce que**
l'on définit le retard (LV) de ligne sur une ligne (4a-e) d'anneau, par application d'un procédé peer-to-peer suivant la norme IEEE 1588 et/ou suivant la norme IEEE 802.1AS.

6. Procédé suivant l'une des revendications précédentes,
**caractérisé en ce qu'**
au stade b4), on choisit la bande de temps de protection aussi grande que le temps de transmission du paquet de données le plus grand possible.

7. Procédé suivant l'une des revendications précédentes,
**caractérisé en ce que**
le procédé de redondance d'anneau est un procédé media-redundancy-protokoll, MRP, et l'appareil (2a) d'anneau gestionnaire prend un charge le rôle du media-redundancy-manager, MRM, (5).

8. Procédé suivant l'une des revendications 1 à 6,
**caractérisé en ce que**
le procédé de redondance d'anneau est le procédé high-speed-redondancy-protokoll, HRP, le procédé device-level-ring, DLR, un procédé resilient-packet-ring, RPR, un procédé moxa-turbo-ring ou un procédé hiper-ring-protokoll.

9. Procédé suivant l'une des revendications précédentes,

**caractérisé en ce que**
l'on active cut-through-switching pour la fenêtre (SZF) de temps d'émission protégée de chaque appareil (2a-f) d'anneau.

10. Réseau (1) de communication,
notamment réseau éthernet, comprenant des appareils (2a-f) d'anneau, parmi eux un appareil (2a) d'anneau gestionnaire, qui sont mis en réseau entre eux dans une topologie en anneau au moyen de lignes (4a-e) d'anneau, le réseau (1) de communication étant conçu pour fonctionner selon un procédé suivant l'une des revendications précédentes.

11. Réseau (1) de communication suivant la revendication 10,
**caractérisé en ce que**
les appareils (2a-f) d'anneau sont chacun un switch, un bridge, un routeur et/ou une station pivot.

FIG 1

FIG 2

FIG 3

FIG 4

a)

X

Szf

b)

X

Szf

c)

X

Szf

t

t

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2501080 A1